# FASCICULE DE BREVET EUROPEEN

(11) **EP 2 364 467 B1**
(45) Date de publication et mention de la délivrance du brevet: **01.01.2020**
(21) Numéro de dépôt: 09756297.9
(22) Date de dépôt: 16.11.2009
(51) Int. Cl.: G05B 23/02

(54) **PROCÉDÉ DE RECONNAISSANCE DE MOTIFS SÉQUENTIELS POUR PROCÉDÉ DE TRAITEMENT DES MESSAGES DE PANNES**
VERFAHREN ZUM ERKENNEN VON SEQUENTIELLEN MUSTERN FÜR EIN VERFAHREN ZUR FEHLERNACHRICHTENVERARBEITUNG
METHOD FOR RECOGNISING SEQUENTIAL PATTERNS FOR A METHOD FOR FAULT MESSAGE PROCESSING

(30) Priorité: 18.11.2008 FR 0857816
(43) Date de publication de la demande: 14.09.2011
(73) Titulaire: AIRBUS (SAS), 31700 Blagnac (FR)
(72) Inventeur: SCHNEIDER, Nicolas, F-31200 Toulouse (FR); DELPRAT, Sylvie, F-31470 Fonsorbes (FR)
(74) Mandataire: Gicquel, Olivier Yves Gérard
(86) Numéro de dépôt international: PCT/EP2009/065215
(87) Numéro de publication internationale: WO 2010/057846

(56) Documents cités:
- EP-A- 1 122 694
- US-A1- 2005 212 523
- US-A1- 2008 250 284
- SIZU HOU ET AL: "Alarms Association Rules Based on Sequential Pattern Mining Algorithm" FUZZY SYSTEMS AND KNOWLEDGE DISCOVERY, 2008. FSKD '08. FIFTH INTERNATIONAL CONFERENCE ON, IEEE, PISCATAWAY, NJ, USA, 18 octobre 2008 (2008-10-18), pages 556-560, XP031357607 ISBN: 978-0-7695-3305-6

## Description

La présente invention relève du domaine de la maintenance de systèmes complexes, et typiquement aéronautiques. Elle concerne plus particulièrement le domaine du diagnostic de pannes d'équipements. Elle a trait spécifiquement à la classification, à l'analyse et au filtrage des messages de panne et de la réduction des faux messages de pannes dits «no fault found».

Il est bien clair que l'amélioration continue des techniques et la recherche de performances toujours plus élevées font que la quantité et la complexité des systèmes embarqués dans les moyens de transport actuels n'ont cessé de croître, en particulier dans les avions. Parallèlement à l'accroissement de ces systèmes et composants, et de leurs systèmes respectifs de contrôle de fonctionnement, le nombre de messages de pannes générés s'accroît en conséquence. Ces nombreux messages de pannes générés par l'avion nécessitent d'être interprétés afin de décider le nombre et l'efficacité des actions de maintenance nécessaires.

De fait, les nombreuses dépendances entre les systèmes d'un avion, et plus généralement de tout système temps-réel complexe, impliquent qu'une panne réelle peut générer une réaction en chaîne de messages de pannes dans tout l'avion. Ces messages de pannes secondaires, dérivant de la cause première de l'incident, ne doivent pas entraîner les actions de maintenance leur étant normalement associées, car elles ne traduisent pas de panne réelle d'un composant, mais simplement des problèmes de conditions de fonctionnement de ce composant du fait d'une panne amont.

Si un composant défectueux est presque toujours repéré, d'autres composants non défectueux peuvent également être indiqués et entraîner des actions de maintenance.

De nombreuses compagnies aériennes ont indiqué que cette question de faux messages de pannes (conduisant à des No Fault Found) était le plus important des problèmes auxquels il fallait trouver une solution. En effet, les vérifications inutiles de pannes parasites se traduisent par de longues immobilisations des avions au sol en maintenance, réduisant leur temps de vol quotidien, et donc la rentabilité des opérations des compagnies aériennes.

Beaucoup d'outils de diagnostic ont été conçus afin de pallier le problème des pannes, quel que soit le domaine d'activité.

Une méthode se démarque rapidement des autres : l'approche à base de modèle. Le principe consiste à construire le «modèle» des systèmes que l'on souhaite diagnostiquer et détecter une panne en observant les différences entre les événements entrants et sortants théoriques et réels. Sur cette base, des calculs d'interactions sont effectués afin de cibler le mieux possible le ou les éléments incriminés.

Par la suite, de nouvelles approches ont émergé, afin d'affiner et perfectionner ces méthodes à base de modèle : les systèmes hybrides. Ces systèmes hybrides ont été affinés par des capacités de raisonnements tels que le raisonnement à partir de cas, les chaînes de Markov... Ces approches permettent alors de diagnostiquer des systèmes dont le comportement n'est pas connu ou de gérer des détections de fautes intermittentes par exemple.

Une grande partie de ces méthodes ont pour point commun de partir du principe que les « modèles » des systèmes sont connus, c'est à dire la logique complète de leurs enchaînements de pannes. Ils se basent alors sur l'observation d'événements anormaux afin de déduire un diagnostic.

Dans le cas présent de systèmes aéronautiques comportant un très grand nombre de sous-systèmes et de composants disposés dans un espace limité, dont le fonctionnement correct dépend de paramètres de température, d'environnement vibratoire, électrique, chimique etc., et dont une panne peut provoquer des modifications locales de ces paramètres, les modèles des systèmes ne sont que très partiellement connus ou formalisés.

L'observation de l'événement anormal initial ne peut se faire que via une série de messages de maintenance dont les causes et conséquences ne sont pas toujours clairement identifiées. Ceci limite grandement l'applicabilité de la méthode à base de modèles au présent problème de pannes multiples de systèmes avion.

Le document EP1122694 décrit un système amélioré de génération d'alerte (20) et une méthode pour l'analyse des performances des tendances.

Le document « Alarms association rules based on a sequential pattern mining algorithm » de Sizu Hou (XP031357607) présente un nouveau modèle d'analyse d'association d'alarmes conçu pour prévoir la source des défauts.

Un détecteur de défaut de chaîne de balayage basé sur un dictionnaire comprenant un dictionnaire avec des signatures de pannes calculées pour les cellules de balayage dans une chaîne de numérisation est décrit dans le document US2008/250284.

Le document US2005/212523 présente une méthodologie de diagnostic et un système électronique embarqué qui permet un échantillonnage optimisé des données à basse fréquence pour les sous-systèmes de motorisation électromécaniques de servomoteur dans un véhicule en service.

La présente invention a donc pour objet d'améliorer les capacités de diagnostic et d'isolation des pannes dans un système complexe dont le modèle n'est pas complètement connu, en augmentant l'efficacité du processus de traitement de ces messages de pannes afin de réduire au maximum des actions de maintenance inutiles et coûteuses.

L'objectif consiste donc à pouvoir repérer ces messages parasites avec suffisamment de confiance et d'expertise pour ne pas réaliser d'actions de maintenance.

Un autre but est d'accroître la connaissance sous-jacente à la génération de messages de pannes afin de pouvoir analyser les dépendances entre-les systèmes, les réactions en chaîne des messages toujours dans un souci d'optimisation des actions de maintenance.

A cet effet, l'invention vise un procédé selon la revendication 1.

Le procédé embarqué filtre les messages de pannes afin de ne garder que les pannes réelles.

Le procédé sol analyse les messages de pannes passés. C'est un procédé de fouilles de données (extraction de connaissances à partir de données, ECD) qui analyse l'historique afin d'en extraire de l'information. Il analyse "a priori" les messages de pannes de vols passés pour en construire un modèle qui sera utilisé dans le processus embarqué. Selon une mise en œuvre avantageuse, le procédé sol comporte une étape d'analyse des messages de pannes par une technique de recherche de motifs séquentiels.

Comme on l'a expliqué, la séparation en deux boucles d'analyse, embarquée et sol, permet de faire appel à la technique de recherche de motifs séquentiels, consommatrice de temps de calcul.

Préférentiellement, le procédé sol comporte une étape de création d'une base de motifs séquentiels de pannes, et dans l'étape de recherche de motifs séquentiels on calcule pour chaque motif séquentiel trouvé :
a) son support : le nombre de fois que ce motif séquentiel apparaît dans la base des motifs séquentiels trouvés,
b) la valeur normalisée du support pour tous les motifs de même taille,
c) une probabilité qui correspond à la valeur de probabilité que le dernier élément du motif soit généré.

Cette disposition permet la création d'un modèle à partir de la base de données de motifs séquentiels de pannes. Ce modèle peut alors être sous forme d'un graphe pondéré, d'un automate à multiplicité ou déterministe, sous forme d'arbres de décision ou de réseaux bayésiens.

Selon une mise en œuvre avantageuse, le procédé sol comporte une étape de construction, à partir de la base de motifs séquentiels, d'un modèle des messages de pannes parasites sous forme d'un automate fini déterministe.

Selon une autre mise en oeuvre, permettant plus de traitement des messages de pannes et une évolution du modèle par modification des paramètres de pondération, le procédé sol comporte une étape de construction, à partir de la base de motifs séquentiels, d'un modèle des messages de pannes parasites sous forme de graphe pondéré déterministe représentant le séquencement des messages de pannes trouvés.

Pour affiner la recherche de motifs séquentiels, le procédé sol utilise parmi ses entrées un modèle de connaissance des systèmes de l'appareil mis à jour par la recherche de motifs séquentiels et une étape de retour d'expérience des utilisateurs.

Selon une première mise en œuvre le modèle de connaissances est constitué sur une architecture à base de règles.

Selon une autre mise en œuvre, le modèle de connaissances est constitué sur une architecture à base de réseaux bayésiens.

Préférentiellement, le modèle de connaissance du procédé sol utilise parmi ses sources de données la dépendance connue entre les systèmes de l'appareil, qui explique des pannes en cascade, et le retour d'expérience des équipes de maintenance.

Cette disposition enrichit le modèle de connaissances et facilite l'extraction de motifs séquentiels parmi les séquences de messages de pannes. On comprend par ailleurs que le modèle de connaissances n'est pas limité à ces sources de données, mais peut également utiliser des connaissances d'experts. Cependant, le procédé est à même d'extraire de l'information. Un des gros avantages de ce de la présente approche est précisément qu'aucune connaissance a priori des systèmes analysés n'est nécessaire.

Selon une mise en œuvre préférée, le procédé sol comporte des étapes de prise en compte du modèle de connaissance pour :
agir sur la recherche de motifs séquentiels en ajoutant, supprimant ou modifiant des motifs dans la base de motifs séquentiels.
agir sur de classification des motifs séquentiels de pannes extraits par l'algorithme de recherche de motifs séquentiels.
influencer le modèle créé à partir des motifs séquentiels en ajoutant, supprimant ou modifiant des états, des liens ou des poids du graphe.

Le modèle peut être ici un graphe pondéré, ou tout autre modèle choisi, selon le type de messages à traiter ou leur complexité.

Avantageusement, dans le procédé embarqué de support au diagnostic en temps réel, l'outil de diagnostic est un modèle sous forme de graphe avion copié à partir du graphe pondéré, permettant de reconnaître, selon des seuils calculés préalablement, si un motif de pannes peut être traité comme plausible, ignoré comme panne parasite vraisemblable, ou mis en attente dans un cas non déterminé et attendant plus de données.

On comprend que les seuils peuvent être fixés initialement, ou être déduits par des calculs statistiques, ou encore appris en fonction des données accumulées. On a alors un processus d'apprentissage progressif.

Les buts et avantages de l'invention seront mieux compris à la lecture de la description et des dessins d'un mode particulier de réalisation, donné à titre d'exemple non limitatif, et pour lequel les dessins représentent :
- Figure 1 : un schéma des étapes du procédé selon l'invention, représentant le scénario du déchargement des messages de pannes jusqu'à la suppression des messages parasites et à la sélection des actions de maintenance
- Figure 2 : un exemple d'automate simple issue d'une recherche de motifs séquentiels pour trois classifications distinctes en partant d'un état de départ (1) : « panne réelle » (11), « panne non pertinente » (2, 3, 9), « non déterminée » (12, 14)
- Figure 3 : un exemple de graphe pondéré construit à partir d'une recherche de motifs séquentiels.

Le procédé selon l'invention est destiné à être mise en œuvre par l'intermédiaire d'un premier logiciel exécuté par un calculateur embarqué sur un avion pour une analyse en temps réel de messages de pannes, puis dans un second temps par un deuxième logiciel exécuté par un ordinateur sol (éventuellement confondu avec le précédent calculateur), pour une analyse a posteriori, typiquement après le vol ayant généré des messages de pannes, par exemple lors de la maintenance de l'avion consécutive à ces messages de pannes.

Il est clair qu'il s'agit d'un système bouclé, et que, avant la première utilisation en vol du procédé, on construit un modèle (graphe, automate, arbre, base de données...) au sol. Puis on injecte ce modèle dans le calculateur embarqué qui traitera les données en temps réel.

Dans la partie avion, ce procédé a pour but de filtrer les messages de pannes en temps réel. Il est également utilisé par un technicien logiciel entre certains vols.

Le calculateur embarqué sur avion est de type connu. Il est dans le présent exemple non limitatif, et le plus souvent dans la pratique, pré-existant dans l'avion. Il reçoit des données de messages de pannes des systèmes avion en temps réel par un réseau également connu et pré-existant.

Ce calculateur est doté de capacités de traitement suffisantes pour mettre en œuvre l'algorithme de la partie temps réel du procédé selon l'invention, et d'espace mémoire également suffisant, d'une part, pour stocker au moins une partie du logiciel correspondant au procédé selon l'invention, et, d'autre part, pour stocker tous les paramètres de calcul et l'historique détaillés des messages de panne reçus, en vue de leur analyse ultérieure au sol par un second logiciel. Ce calculateur est également doté d'une interface de type connu de chargement de données permettant une mise à jour régulière du logiciel.

Il comporte également une interface visuelle de type écran, éventuellement tactile, pour présenter les informations pertinentes.

De même, l'ordinateur sol est de type connu, par exemple de type PC. Il est doté de capacités de traitement suffisantes pour mettre en œuvre l'algorithme de la partie sol du procédé selon l'invention, et d'espace mémoire suffisant, d'une part, pour stocker au moins une partie du logiciel correspondant au procédé selon l'invention, et, d'autre part, pour stocker tous les paramètres de calcul et l'historique détaillés des messages de panne reçus.

Cet ordinateur sol est également doté d'une interface de type connu de chargement de données pour récupérer les données du calculateur embarqué, et pour sauver les résultats d'analyse et les nouveaux paramètre de logiciel vol, en vue de la mise à jour du logiciel sur le calculateur embarqué.

De façon résumée, lors d'un vol de l'avion équipé pour mettre en œuvre le procédé selon l'invention, le calculateur embarqué est éventuellement confronté à une ou une succession de messages de pannes. Cette succession de messages de pannes est traitée en temps réel par un logiciel mettant en œuvre le procédé, lequel en extrait les pannes réelles les plus probables, et élimine les pannes qu'il considère vraisemblablement indirectes. L'équipe de maintenance prendra des décisions sur la base de ces pannes réelles les plus probables.

Par la suite, après atterrissage de l'avion, une analyse a posteriori des données, et la confirmation ou l'infirmation de la véracité des pannes supposées par les techniciens de maintenance permet de modifier les paramètres du logiciel de diagnostic. Elle permet surtout de ne traiter que les pannes réelles, de diminuer les coûts de tests inutiles et de fausses déposes de matériels chez les équipementiers.

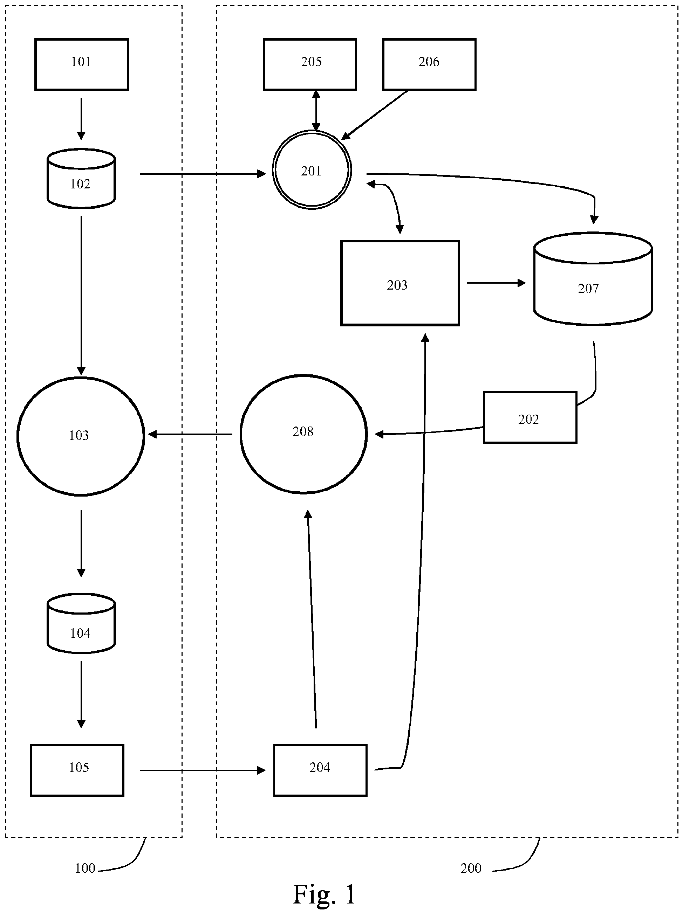

Comme illustré sur la figure 1, le procédé selon l'invention combine donc :
- un procédé avion 100, exécuté en temps réel (le procédé avion est donc également appelé boucle courte en ce qu'il fournit une réponse quasi immédiate à l'équipage et aux équipes de maintenance face à un ensemble de signaux de pannes) pour acquérir des données et aider au diagnostic immédiat,
- et un procédé sol 200 d'analyse a posteriori des données et d'amélioration de l'outil de diagnostic (ce procédé est également appelé « boucle longue » dans la suite de la description).

Le procédé global utilise une succession nouvelles d'algorithmes connus en soi dans d'autres applications (habitudes de consommation, navigation web), pour traiter le problème des faux messages de pannes apparaissant dans les systèmes temps réel complexes tels que les avions.

Dans la description qui suit, on présente d'abord le procédé sol 200.

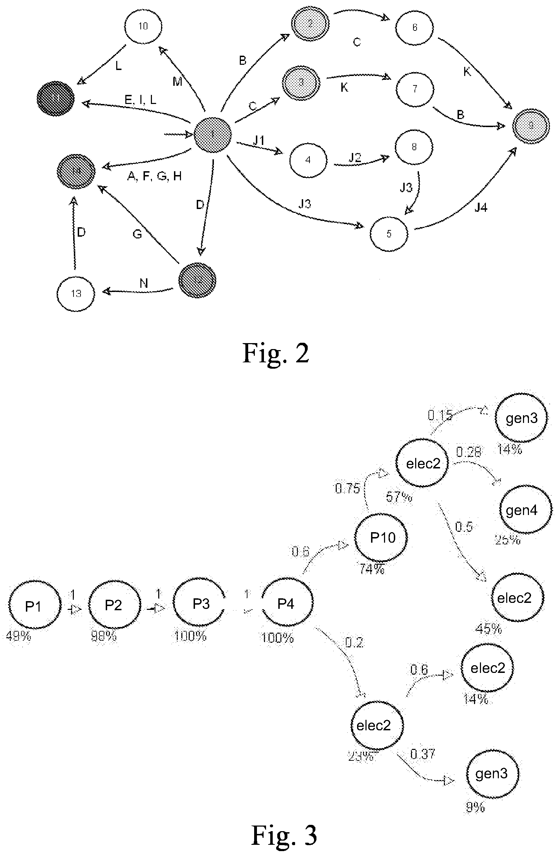

Le procédé sol 200 comporte une étape 201 d'analyse des messages de pannes par une technique, connue en soi, de recherche de motifs séquentiels. Dans un second temps, le procédé sol 200 comporte une étape 202 de construction d'un modèle des messages de pannes parasites, par exemple sous forme de graphe pondéré 208, de type également connu (et par exemple illustré figure 3).

Ce procédé sol 200 utilise comme entrées un modèle de connaissance partiel 203 des systèmes de l'avion, construit initialement par les concepteurs de l'avion, et mis à jour par la recherche de motifs séquentiels 201 et le retour d'expérience 204 des actions de maintenance.

Le « modèle de connaissances » 203 permet d'exploiter et de stocker de façon incrémentale la connaissance partielle sur les systèmes de l'avion et sur la génération des messages de pannes.

Le « retour d'expérience » 204 permet au système d'évoluer de façon automatique et de pouvoir vérifier la pertinence des résultats (par exemple : telle panne ou tel motif de pannes nécessitait-elle bien une procédure de maintenance ?).

La recherche de motifs séquentiels 201 est le cœur du procédé sol 200 d'analyse.

En effet, des messages de pannes étant générés les uns après les autres lors d'un vol d'un avion comportant une anomalie, des motifs particuliers de successions de ces messages de pannes peuvent émerger comme apparaissant plus fréquemment, et le but est de pouvoir les identifier. C'est précisément le but des techniques connues de recherche de motifs séquentiels.

On rappelle ici que la technique de recherche de motifs séquentiels permet de découvrir des corrélations entre séries d'événements en fonction de leur chronologie d'apparition. Il s'agit de déterminer quelles sous-séquences d'événements apparaissent le plus fréquemment au sein d'un ensemble de séquences donné.

De telles techniques sont utilisées par exemple pour l'analyse de comportement de consommateurs ou la prédiction d'actes malveillants, pour l'analyse de données météorologiques, voire pour l'analyse de données boursières. Il est connu que l'extraction de motifs longs est complexe, et demande des moyens de calcul puissants.

On note ici qu'il apparaît une différence évidente entre le procédé sol 200 et le procédé avion 100, puisque dans le procédé avion, les messages de pannes continuent de survenir alors même que l'analyse est en cours, ce qui modifie éventuellement le diagnostic et rend donc difficile la recherche de motifs séquentiels en temps réel.

Dans le procédé sol 200 au contraire, la succession complète de messages de pannes est connue et peut être analysée d'un coup, sans contrainte de temps de calcul.

La recherche de motifs séquentiels 201 utilise pour cela un algorithme construit sur la base de plusieurs algorithmes issus de la littérature, pouvant répondre de la manière la plus pertinente possible aux besoins et contraintes spécifiques à savoir :
- Gestion d'une base de données de messages de panne volumineuse, dont la taille est liée au nombre de systèmes, sous-systèmes et composants avion.
- Nombre de messages de pannes générés en même temps.
- Impossibilité d'élaguer la recherche sous peine de supprimer un message de panne pertinent ou issu d'une panne réelle.
- Capacité de déterminer si un motif est pertinent.
- Capacité de gestion des contraintes temporelles et des contraintes systèmes.
- Utilisation d'une méthode qui ne soit pas une « boîte noire » afin de pouvoir réutiliser les résultats pour la construction du modèle.

Ces contraintes et besoins liés à au secteur aéronautique ont donc conduit l'étape de recherche de motifs séquentiels 201 du présent procédé à utiliser diverses techniques notamment :
1/ Le moteur de recherche de motif séquentiel utilisé dans le présent exemple est basé sur un algorithme connu sous le nom de Spade (Sequential Patterns Discovery using Equivalent Class), développé par Zaki en 2001.
2/ CloSpan (Closed Sequential Pattern Mining, par Yan, Han et Afshar 2003) est un autre algorithme connu permettant d'optimiser la recherche et l'extraction des motifs séquentiels, et utilisé ici en complément de Spade.
3/ Incremental: une technique connue de l'homme de l'art (par exemple par Cheung, ICDE 96 ou par Zhang, Kao 2002) qui utilise la connaissance extraite au rang n-1 pour extraire les motifs séquentiels au rang n+1.
4/ Interactive Sequence Mining: une technique également connue (par exemple Parthasarathy, Zaki CIKM 99), qui utilise la connaissance générale du modèle de connaissance 203 pour construire les motifs séquentiels au rang n+1, mais qui nécessite de larges ressources de mémoire et de temps de calcul.
5/ Contraintes : prise en compte de contraintes comme un temps minimal ou maximal entre deux messages successifs, une fenêtre de temps pendant laquelle les messages sont considérés comme étant générés ensemble. Prise en compte également de contraintes de longueur de motif ou des contraintes sur certains attributs.

La recherche de motifs séquentiels 201 utilise un paramétrage 206 que l'utilisateur doit renseigner :
L'attribut représentant une transaction
L'attribut représentant le temps
Liste des contraintes sur les attributs
Contraintes temporelles (exemple fenêtre de temps maximum pour un séquence, laps de temps maximum ou minimum entre deux événements)
Longueur maximale des motifs séquentiels (limite en nombre d'événements considérés dans un motif)
Support minimal des motifs séquentiels (fréquence minimale pour considérer un motif séquentiel)
Le but de ces paramètres est de faciliter la recherche et de réduire significativement le temps de calcul.

Ce paramétrage 206 permet de s'adapter aux contraintes inhérentes d'un cas d'application et est valable tout au long du scénario (au contraire du modèle de connaissances 203 qui lui peut interagir de façon plus dynamique avec le système).

Au final, la recherche de motifs séquentiels 201 génère une base de données 207, non plus de messages de pannes, mais de motifs de pannes, ce qui constitue une différence fondamentale d'approche.

Le modèle de connaissances 203 a pour but de rendre plus pertinent l'algorithme de recherche de motifs séquentiels 201 et de guider la création et la mise à jour du graphe 208 qui en découle.

Ce modèle de connaissance 203 utilise comme sources de données : la connaissance des experts (concepteurs de l'avion et spécialistes des motifs séquentiels de pannes avion), la dépendance connue entre les systèmes avion, qui explique des pannes en cascade, et le retour d'expérience 204 des équipes de maintenance, ceci afin de construire et de faire évoluer sa connaissance.

Le modèle de connaissance 203 peut directement agir sur la recherche de motifs séquentiels 201 en ajoutant, supprimant ou modifiant des motifs dans la base de motifs séquentiels 207. Il a également une action de classification des messages de pannes (réels, non pertinents ou autres selon le contexte et le domaine d'application) ; en effet, de par sa connaissance des systèmes et du retour d'expérience, il peut, à terme, classifier les motifs séquentiels extraits par l'algorithme de recherche de motifs séquentiels 201 et stockés dans la base de motifs séquentiels 207.

Enfin, le modèle de connaissance 203 peut influencer le graphe 208 (ou tout autre modèle utilisé) créé à partir des motifs séquentiels en ajoutant, supprimant ou modifiant des états, des liens ou des poids du graphe.

Ce modèle de connaissance 203 sert donc à capitaliser les connaissances connues et extraites. La façon de le modéliser peut être multiple et dépend essentiellement du cas d'application.

Selon la complexité du système étudié et la profondeur des connaissances à modéliser, le modèle de connaissances 203 est constitué sur une architecture à base de règles pour des systèmes relativement peu complexes, ou sur une architecture plus complexe comme des réseaux bayésiens, ce qui constitue ici l'approche préférée.

On rappelle que les réseaux bayésiens sont à la fois des modèles de représentation de connaissances, et des moyens de calcul de probabilités conditionnelles. Dans un tel réseau, les relations de règles (relation de cause à effet) sont probabilisées au lieu d'être déterministes.

Ces deux approches de modèles de connaissances sont de type connu et ne sont pas décrits plus en détails ici.

Le point commun reste que ce modèle de connaissances 203 est initialisé par la connaissance des experts et évolue avec les données et connaissances extraites issues du retour d'expérience 204 et de la recherche de motifs séquentiels 201.

Vis à vis de la construction du graphe 208, l'algorithme de recherche de motifs séquentiels 201 est conçu de telle sorte qu'il est possible d'en déduire un graphe pondéré 208. En effet, on intègre dans l'exécution de l'algorithme de recherche de motifs séquentiels 201 plusieurs calculs qui permettent par la suite de construire un graphe.

Plus précisément, on calcule pour chaque motif séquentiel retrouvé :
a) son support : le nombre de fois que ce motif séquentiel apparaît clans la base de motifs séquentiels 207
b) la valeur normalisée du support pour tous les motifs de même taille. Cette valeur est comprise entre 1 et 100
c) une probabilité : qui correspond à la valeur de probabilité que le dernier élément du motif soit généré.

Plusieurs choix s'offrent alors en fonction du contexte et du cas d'application :
- Si seul le séquencement des messages de pannes est une information pertinente, on construit de façon connue un automate fini déterministe à partir de ces valeurs (tel que par exemple illustré figure 2). On rappelle qu'un automate fini déterministe comporte un ensemble fini d'états distincts, entre lesquels il passe en suivant des transitions existants entre ces états, cette évolution d'état en état se faisant à la lecture de chaque lettre d'un mot fourni en entrée, ici un motif séquentiel de messages de pannes.
- Sinon, et comme c'est le cas préféré dans le présent exemple, avec ces valeurs on construit un graphe pondéré 208 déterministe, de type connu, représentant le séquencement des messages de pannes choisis, et ce graphe est copié et chargé dans la mémoire du calculateur avion sous forme de graphe avion 103.

On peut alors directement inférer (c'est à dire qu'en fonction des pannes observées, on peut tirer des conclusions probabilisées de pannes réelles et de pannes indirectes et donc non réelles, même non encore observées) à partir du graphe avion 103 au fur et à mesure de la génération de messages de pannes dans l'avion.

De même, on peut à tout moment donner une valeur de confiance quant à la classification du motif (par exemple : Quel est le degré de non-pertinence du motif ?) qui permet de justifier une décision d'intervention de maintenance, prédire le comportement général des messages en cours de génération (par exemple : quelle est la branche la plus probable ?), ou prendre en compte des messages erronés ou manquants en autorisant l'utilisation de poids négatifs clans le graphe avion 103.

Le procédé avion 100 de support au diagnostic en temps réel («boucle courte») utilise le modèle sous forme de graphe avion 103 pour traiter les messages de pannes 101 générés en temps réel par l'avion. Ces messages de pannes 101 sont stockés dans une base de données 102, en conjonction avec des données de temps et d'autres paramètres destinés à caractériser les messages, en vue de leur récupération ultérieure par le procédé sol 200.

Le graphe avion 103 permet alors de reconnaître si des motifs de pannes parasites sont présents et de les supprimer le cas échéant.

Le graphe avion 103 peut, par exemple, classifier une suite de messages de pannes 101 générés par l'avion comme étant non pertinente à 60% (une séquence de messages 101 générée par l'avion est reconnaissable à 60% à un motif séquentiel identifié comme « no fault found » dans la base de motifs séquentiels 207).

Dans une étape 104, selon les seuils fixés par l'utilisateur (équipe de maintenance) et mémorisés dans le calculateur avion, ce un motif de pannes 101 pourra être traité comme plausible, ignoré comme panne parasite vraisemblable, ou mis en attente dans un cas non déterminé et attendant plus de données...

Dans le cas d'un motif de pannes 101 classé « non pertinent » à 100%, celui-ci sera directement filtré afin de ne pas être pris en compte clans le choix de l'action de maintenance.

A la fin du traitement des messages de pannes 101 par le procédé avion 100, ne restent que les messages 105 probablement issus d'une réelle défaillance d'un système de l'avion, qui ont donc été discriminés par le procédé des messages de pannes sans faute réelle du système associé (no fault found).

Le retour d'expérience 204 permet de s'assurer que les résultats trouvés par le procédé sol 200 et modélisés dans le graphe pondéré 208 coïncident bien avec leur application réelle dans le cadre du procédé avion 100, sous la forme de panne réelles et fausses correctement prédites.

Si tel n'est pas le cas, alors les données des opérations de maintenance servent à mettre à jour le graphe pondéré 208 en modifiant certains états, liaisons ou poids dans le graphe, de façon connue et non détaillée ici.

Si une nouvelle panne est trouvée alors le retour d'expérience 204 ajoute cet événement dans le graphe 208 (si la recherche de motifs séquentiels 201 ne l'a pas fait avant).

Ce retour d'expérience 204 est très important, car outre le fait de s'assurer de la bonne cohérence des résultats, il créée une boucle de rétro-action qui permet au processus entier de s'auto améliorer.

Le procédé dans son ensemble, une fois mis en place, forme un cycle d'apprentissage continu, lui permettant de s'adapter à de nouvelles situations et d'affiner son filtrage et son analyse des messages de pannes à partir des données réellement constatées et du retour d'expérience 204.

Le procédé de traitement de séquences de messages de pannes, selon l'invention présente plusieurs avantages. Il pourrait être utilisé par de nombreux constructeurs d'avions et d'hélicoptères afin d'améliorer leur analyse et leur compréhension de la génération des messages de pannes et d'améliorer le diagnostic et l'isolation des pannes.

Ce processus leur permettrait de réduire l'affichage par les systèmes de support à la maintenance et le traitement des pannes parasites par les équipes de maintenances, et donc ainsi éviter des actions de maintenance inutiles, coûteuses et engendrant des pertes de temps importantes (notamment pendant les temps de rotation des avions au sol). Il permet également de fournir des informations quant à la confiance, la probabilité et la pertinence des messages de pannes et pouvoir cibler de façon plus sûre et rapide les actions de maintenance nécessaires.

La principale innovation et donc l'un des principaux avantages par rapport à d'autres approches de ce processus est de procurer un système qui exploite complètement le retour d'expérience et les connaissances générales sur les systèmes de l'avion et de leur défaillance. Le système s'adapte aux nouvelles pannes et s'améliore de façon automatique au fur et à mesure de l'apparition des pannes et de l'évolution des connaissances.

De plus, cette approche permet d'avoir un modèle explicite sur le déclenchement des pannes et la génération des messages associés, sous forme d'un graphe facilement analysable, ce qui peut également donner des pistes d'amélioration lors de la conception des systèmes pour un nouvel appareil.

Le modèle de connaissance est spécifique à chaque famille d'avion, et tient compte de l'historique des pannes.

La portée de la présente invention ne se limite pas aux détails des formes de réalisation ci-dessus considérées à titre d'exemple, mais s'étend au contraire aux modifications à la portée de l'homme de l'art.

Dans la description, on a utilisé comme modèle 208 soit un graphe pondéré déterministe, soit un automate déterministe. Il est à noter que le présent procédé ne se limite pas à ces deux types de modèles pour représenter le séquencement des pannes. Beaucoup d'autres modèles peuvent être envisagés selon le type de messages à traiter et leur complexité.

## Revendications

1. Procédé de traitement d'au moins une séquence de messages de pannes survenant dans un appareil aéronautique comprenant de nombreux systèmes embarqués et au moins un calculateur embarqué, permettant de discriminer des messages de pannes issus d'une réelle défaillance d'un des systèmes embarqués et des messages de pannes sans faute réelle générés par un des systèmes embarqués, ledit procédé présentant les étapes suivantes :
- construction d'un modèle de connaissance (203) utilisable par le calculateur embarqué avant la première utilisation en vol,
- exécution en vol et en temps réel d'un procédé embarqué (100), pour enregistrer des données de messages de pannes (101), formant des séquences stockées dans une base de données de pannes (102) dudit calculateur embarqué, et aider au diagnostic immédiat en utilisant un outil de diagnostic (103) pour déterminer, parmi les messages de pannes, lesquels sont issus d'une réelle défaillance,
- et mise en œuvre par un ordinateur sol d'un procédé sol (200) d'analyse a posteriori des données de séquences de pannes de la base de données de pannes (102), ledit procédé sol (200) comporte une étape d'amélioration de l'outil de diagnostic (103) utilisé dans le procédé embarqué (100) pour une utilisation en vol ultérieure dudit outil (103).

2. Procédé selon la revendication 1, **caractérisé en ce que** le procédé sol (200) comporte une étape (201) d'analyse des messages de pannes par une technique de recherche de motifs séquentiels.

3. Procédé selon la revendication 2, **caractérisé en ce que** le procédé sol (200) comporte une étape de création d'une base de motifs séquentiels (207) de pannes, et **en ce que** dans l'étape de recherche de motifs séquentiels (201) on calcule pour chaque motif séquentiel trouvé :
a) son support : le nombre de fois que ce motif séquentiel apparaît dans la base des motifs séquentiels (207) trouvés,
b) la valeur normalisée du support pour tous les motifs de même taille,
c) une probabilité qui correspond à la valeur de probabilité que le dernier élément du motif soit généré.

4. Procédé selon la revendication 3, **caractérisé en ce que** le procédé sol (200) comporte une étape (202) de construction, à partir de la base de motifs séquentiels (207), d'un modèle des messages de pannes parasites sous forme d'un automate fini déterministe (208).

5. Procédé selon la revendication 3, **caractérisé en ce que** le procédé sol (200) comporte une étape (202) de construction, à partir de la base de motifs séquentiels (207), d'un modèle des messages de pannes parasites sous forme de graphe pondéré (208) déterministe représentant le séquencement des messages de pannes trouvés.

6. Procédé selon l'une quelconque des revendications 2 à 5, **caractérisé en ce que** le procédé sol (200) utilise parmi ses entrées un modèle de connaissance (203) des systèmes de l'appareil mis à jour par la recherche de motifs séquentiels (201) et une étape de retour d'expérience (204) des utilisateurs.

7. Procédé selon la revendication 6, **caractérisé en ce que** le modèle de connaissances (203) est constitué sur une architecture à base de règles.

8. Procédé selon la revendication 6, **caractérisé en ce que** le modèle de connaissances (203) est constitué sur une architecture à base de réseaux bayésiens.

9. Procédé selon l'une quelconque des revendications 6 à 8, **caractérisé en ce que** le modèle de connaissance (203) utilise parmi ses sources de données la dépendance connue entre les systèmes de l'appareil, qui explique des pannes en cascade, et le retour d'expérience (204) des équipes de maintenance.

10. Procédé selon la revendication 5 et l'une quelconque des revendications 6 à 9, **caractérisé en ce que** le procédé sol (200) comporte des étapes de prise en compte du modèle de connaissance (203) pour :
agir sur la recherche de motifs séquentiels (201) en ajoutant, supprimant ou modifiant des motifs dans la base de motifs séquentiels (207).
agir sur la classification des motifs séquentiels de pannes extraits par l'algorithme de recherche de motifs séquentiels (201).
influencer le modèle (208) créé à partir des motifs séquentiels en ajoutant, supprimant ou modifiant des états, des liens ou des poids du graphe.

11. Procédé selon l'une quelconque des revendications 5 à 10, **caractérisé en ce que** dans le procédé embarqué (100) de support au diagnostic en temps réel, l'outil de diagnostic est un modèle sous forme de graphe avion (103) copié à partir du graphe pondéré (208) et permettant de reconnaître, dans une étape (104), selon des seuils calculés préalablement, si un motif de pannes (101) peut être traité comme plausible, ignoré comme panne parasite vraisemblable, ou mis en attente dans un cas non déterminé et attendant plus de données.

## Patentansprüche

1. Verfahren zur Verarbeitung wenigstens einer Folge von Fehlermeldungen, die in einem Luftfahrtgerät auftreten, das zahlreiche bordeigene Systeme und wenigstens einen Bordcomputer umfasst, welches es ermöglicht, zwischen Fehlermeldungen, die durch einen tatsächlichen Ausfall eines der bordeigenen Systeme hervorgerufen werden, und Fehlermeldungen ohne tatsächlichen Fehler, die von einem der bordeigenen Systeme erzeugt werden, zu unterscheiden,
wobei das Verfahren die folgenden Schritte aufweist:
- Erstellung eines wissensbasierten Modells (203), das von dem Bordcomputer vor dem ersten Einsatz während des Fluges verwendet werden kann,
- Ausführung, während des Fluges und in Echtzeit, eines bordgestützten Verfahrens (100) zum Registrieren von Daten von Fehlermeldungen (101), welche Folgen bilden, die in einer Fehlerdatenbank (102) des Bordcomputers gespeichert werden, und zum Unterstützen der sofortigen Diagnose unter Verwendung eines Diagnosetools (103), um unter den Fehlermeldungen diejenigen zu bestimmen, die durch einen tatsächlichen Ausfall hervorgerufen werden,
- und Durchführung, durch einen Bodencomputer, eines bodengestützten Verfahrens (200) zur A-Posteriori-Analyse der Daten von Fehlerfolgen der Fehlerdatenbank (102), wobei das bodengestützte Verfahren (200) einen Schritt der Verbesserung des bei dem bordgestützten Verfahren (100) verwendeten Diagnosetools (103) für eine spätere Verwendung des Tools (103) während des Fluges umfasst.

2. Verfahren nach Anspruch 1, **dadurch gekennzeichnet, dass** das bodengestützte Verfahren (200) einen Schritt (201) der Analyse der Fehlermeldungen mittels eines Verfahrens zur Suche nach sequentiellen Mustern umfasst.

3. Verfahren nach Anspruch 2, **dadurch gekennzeichnet, dass** das bodengestützte Verfahren (200) einen Schritt der Erzeugung einer Basis sequentieller Muster (207) von Fehlern umfasst, und dadurch, dass im Schritt der Suche nach sequentiellen Mustern (201) für jedes gefundene sequentielle Muster berechnet werden:
a) sein Träger: die Anzahl, wie oft dieses sequentielle Muster in der Basis gefundener sequentieller Muster (207) erscheint,
b) der normierte Wert des Trägers für alle Muster derselben Größe,
c) eine Wahrscheinlichkeit, welche dem Wahrscheinlichkeitswert entspricht, dass das letzte Element des Musters erzeugt wird.

4. Verfahren nach Anspruch 3, **dadurch gekennzeichnet, dass** das bodengestützte Verfahren (200) einen Schritt (202) der Erstellung, anhand der Basis sequentieller Muster (207), eines Modells der unechten Fehlermeldungen in Form eines deterministischen endlichen Automaten (208) umfasst.

5. Verfahren nach Anspruch 3, **dadurch gekennzeichnet, dass** das bodengestützte Verfahren (200) einen Schritt (202) der Erstellung, anhand der Basis sequentieller Muster (207), eines Modells der unechten Fehlermeldungen in Form eines deterministischen gewichteten Graphen (208) umfasst, welcher die Abfolge der gefundenen Fehlermeldungen darstellt.

6. Verfahren nach einem der Ansprüche 2 bis 5, **dadurch gekennzeichnet, dass** das bodengestützte Verfahren (200) als eine seiner Eingangsgrößen ein wissensbasiertes Modell (203) der Systeme des Luftfahrtgeräts verwendet, das durch die Suche nach sequentiellen Mustern (201) und einen Schritt der Einbringung von Erfahrungen (204) der Benutzer aktualisiert wird.

7. Verfahren nach Anspruch 6, **dadurch gekennzeichnet, dass** das wissensbasierte Modell (203) gemäß einer Architektur auf der Basis von Regeln erstellt wird.

8. Verfahren nach Anspruch 6, **dadurch gekennzeichnet, dass** das wissensbasierte Modell (203) gemäß einer Architektur auf der Basis von Bayesschen Netzen erstellt wird.

9. Verfahren nach einem der Ansprüche 6 bis 8, **dadurch gekennzeichnet, dass** das wissensbasierte Modell (203) als eine seiner Datenquellen die bekannte Abhängigkeit zwischen den Systemen des Luftfahrtgeräts, welche Kaskaden von Fehlern erklärt, und die Einbringung von Erfahrungen (204) der Wartungsteams verwendet.

10. Verfahren nach Anspruch 5 und einem der Ansprüche 6 bis 9, **dadurch gekennzeichnet, dass** das bodengestützte Verfahren (200) Schritte der Berücksichtigung des wissensbasierten Modells (203) umfasst, um:
auf die Suche nach sequentiellen Mustern (201) durch Hinzufügen, Weglassen oder Modifizieren von Mustern in der Basis sequentieller Muster (207) einzuwirken,
auf die Klassifizierung der sequentiellen Muster von Fehlern einzuwirken, die durch den Algorithmus der Suche nach sequentiellen Mustern (201) extrahiert wurden,
das aus den sequentiellen Mustern erzeugte Modell (208) durch Hinzufügen, Weglassen oder Modifizieren von Zuständen, Verbindungen oder Gewichten des Graphen zu beeinflussen.

11. Verfahren nach einem der Ansprüche 5 bis 10, **dadurch gekennzeichnet, dass** bei dem bordgestützten Verfahren (100) zur Unterstützung der Diagnose in Echtzeit das Diagnosetool ein Modell in Form eines Flugzeug-Graphen (103) ist, das anhand des gewichteten Graphen (208) kopiert wurde und es ermöglicht, in einem Schritt (104) mithilfe zuvor berechneter Schwellenwerte zu erkennen, ob ein Fehlermuster (101) als plausibel behandelt, als wahrscheinlicher unechter Fehler ignoriert oder in einem unbestimmten Fall in Erwartung von mehr Daten in eine Wartestellung versetzt werden kann.

## Claims

1. Method for processing at least one sequence of fault messages occurring in an aeronautical device comprising numerous on-board systems and at least one on-board computer, making it possible to distinguish between fault messages originating from an actual failure of one of the on-board systems and fault messages without an actual fault generated by one of the on-board systems, said method having the following steps:
- constructing a knowledge model (203) able to be used by the on-board computer before the first in-flight use,
- executing, in flight and in real time, an on-board method (100) for recording data from fault messages (101), forming sequences stored in a fault database (102) of said on-board computer, and assisting in the immediate diagnosis using a diagnostic tool (103) in order to determine, from among the fault messages, those which originate from an actual failure,
- and implementing, by way of a ground computer, a ground method (200) for analysing a posteriori fault sequence data from the fault database (102), said ground method (200) including a step of improving the diagnostic tool (103) used in the on-board method (100) for a subsequent in-flight use of said tool (103).

2. Method according to Claim 1, **characterized in that** the ground method (200) includes a step (201) of analysing the fault messages using a sequential pattern search technique.

3. Method according to Claim 2, **characterized in that** the ground method (200) includes a step of creating a base of sequential fault patterns (207), and **in that** the step of searching for sequential patterns (201) involves calculating, for each sequential pattern that is found:
a) its support: the number of times that this sequential pattern appears in the base of sequential patterns (207) that are found,
b) the normalized value of the support for all of the patterns of the same size,
c) a probability that corresponds to the probability value of the last element of the pattern being generated.

4. Method according to Claim 3, **characterized in that** the ground method (200) includes a step (202) of constructing, from the base of sequential patterns (207), a model of the stray fault messages in the form of a deterministic finite-state machine (208).

5. Method according to Claim 3, **characterized in that** the ground method (200) includes a step (202) of constructing, from the base of sequential patterns (207), a model of the stray fault messages in the form of a deterministic weighted graph (208) representing the sequencing of the fault messages that are found.

6. Method according to any one of Claims 2 to 5, **characterized in that** the ground method (200) uses, among its inputs, a knowledge model (203) of the systems of the device updated by the search for sequential patterns (201) and a step of providing user feedback (204).

7. Method according to Claim 6, **characterized in that** the knowledge model (203) is formed on a rule-based architecture.

8. Method according to Claim 6, **characterized in that** the knowledge model (203) is formed on a Bayesian network-based architecture.

9. Method according to any one of Claims 6 to 8, **characterized in that** the knowledge model (203) uses, among its data sources, the known dependency between the systems of the device, which explains faults in cascade, and feedback (204) from maintenance teams.

10. Method according to Claim 5 and any one of Claims 6 to 9, **characterized in that** the ground method (200) includes steps of taking into account the knowledge model (203) in order to:
act on the search for sequential patterns (201) by adding, deleting or changing patterns in the base of sequential patterns (207),
act on the classification of the sequential fault patterns extracted by the algorithm for searching for sequential patterns (201),
influence the model (208) created from the sequential patterns by adding, deleting or changing states, links or weights of the graph.

11. Method according to any one of Claims 5 to 10, **characterized in that**, in the real-time on-board diagnostic support method (100), the diagnostic tool is a model in the form of an aircraft graph (103) copied from the weighted graph (208) and making it possible to recognize, in a step (104), according to previously calculated thresholds, whether a fault pattern (101) is able to be processed as plausible, ignored as a probable stray fault, or queued in a case that is not determined and awaiting more data.
